# FASCICULE DE BREVET EUROPEEN

(11) **EP 1 806 535 B1**
(45) Date de publication et mention de la délivrance du brevet: **02.09.2015**
(21) Numéro de dépôt: 07100246.3
(22) Date de dépôt: 08.01.2007
(51) Int. Cl.: F23R 3/14, F23R 3/28, F23R 3/34

(54) **Système d'injection multimode pour chambre de combustion, notamment d'un turboréacteur**
Multimodales Einspritzsystem für eine Brennkammer, insbesondere für eine Gasturbine
Multimode injection system for a combustion chamber, particularly of a gas turbine

(30) Priorité: 09.01.2006 FR 0650071
(43) Date de publication de la demande: 11.07.2007
(73) Titulaire: SNECMA, 75015 Paris (FR)
(72) Inventeur: Hernandez, Didier, 77720, Quiers (FR); Noel, Thomas, 75012 Paris (FR)
(74) Mandataire: Intès, Didier Gérard André

(56) Documents cités:
- EP-A- 0 957 311
- EP-A- 1 245 900
- JP-A- 2004 093 076
- US-A1- 2002 162 333
- US-A1- 2004 003 596
- US-A1- 2005 257 530
- US-B1- 6 418 726

## Description

L'invention se rapporte à un dispositif d'injection multimode pour chambre de combustion, notamment la chambre de combustion d'un turboréacteur. Elle concerne plus particulièrement un perfectionnement permettant d'assurer une meilleure pulvérisation périphérique.

Dans une chambre de combustion classique d'un moteur de turbine à gaz, le carburant est introduit par l'intermédiaire de plusieurs injecteurs de carburant. Le carburant est mélangé à l'air dans chacun des dispositifs d'injection avant d'être introduit puis brûlé dans la chambre de combustion.

On connaît un dispositif d'injection multimode dans lequel l'injection de carburant est différenciée en fonction du régime. Par exemple, le brevet européen 1 369 644 décrit un dispositif d'injection dans lequel deux modes d'injection sont combinés grâce à deux systèmes de pulvérisation de carburant, coaxiaux, alimentés respectivement par deux circuits de distribution de carburant, un circuit primaire, à débit permanent relativement faible qui permet d'introduire le carburant dans une zone de combustion optimisée pour les bas régimes et un circuit secondaire, à débit intermittent introduisant le carburant dans une zone de combustion optimisée pour les forts régimes. Pour ce faire, le dispositif de pulvérisation comprend une tête de pulvérisation comprenant une buse centrale alimentée par ledit circuit primaire et une chambre de distribution périphérique alimentée par le circuit secondaire.

Dans le système antérieur décrit, la qualité de la pulvérisation périphérique conditionne l'importance des émissions polluantes à fort régime. Un autre dispositif d'injection multimode présentant les caractéristiques de la partie caractérisante de la revendication 1 est connu du document de brevet US 2004/003596 A1. Les documents EP 1 245 900 A2 et JP 2004 093076 A divulguent des dispositifs de l'art antérieur pertinents, présentant des déflecteurs d'air annulaires installés radialement et ayant des éléments d'injection de carburant. L'invention propose un dispositif d'injection multimode permettant de limiter les émissions polluantes à fort régime, notamment au décollage.

Plus particulièrement, l'invention concerne un dispositif d'injection multimode pour chambre de combustion, du type comportant au moins deux systèmes de pulvérisation de carburant coaxiaux, caractérisé en ce qu'un système de pulvérisation périphérique comprend un distributeur à chambre de distribution annulaire communiquant avec une pluralité de trous d'éjection de carburant régulièrement répartis circonférentiellement et un déflecteur giratoire d'air, annulaire, installé radialement extérieurement par rapport à ladite pluralité de trous d'éjection, en ce que ledit déflecteur comporte des ailettes définissant des canaux d'éjection d'air régulièrement espacés circonférentiellement et dirigeant l'air vers les jets de carburant issus desdits trous d'éjection et en ce que, pour chaque axe d'éjection de carburant défini par un trou d'éjection, il existe un canal d'éjection d'air correspondant dont au moins la partie radialement la plus interne possède une médiane coupant sensiblement cet axe d'éjection de carburant.

De plus, pour limiter l'encombrement axial d'un tel dispositif d'injection, ledit déflecteur annulaire comporte deux parois intérieurement tronconiques, coaxiales, respectivement amont et aval, de conicité dirigée vers l'aval. La chambre de distribution annulaire comporte une paroi tronconique dans laquelle sont pratiqués lesdits trous d'éjection et la face extérieure de cette paroi tronconique possède une génératrice parallèle ou confondue de la face intérieure de la paroi amont dudit déflecteur annulaire.

De cette façon, la chambre de distribution annulaire s'engage coaxialement à l'intérieur dudit déflecteur annulaire, ce qui réduit l'encombrement axial du système de pulvérisation.

L'invention concerne également toute chambre de combustion équipée d'une pluralité de dispositifs d'injection multimode selon la définition qui précède.

L'invention vise également tout turboréacteur équipé d'une telle chambre de combustion.

L'invention sera mieux comprise et d'autres avantages de celle-ci apparaîtront plus clairement à la lumière de la description qui va suivre d'un dispositif d'injection multimode conforme à son principe, donnée uniquement à titre d'exemple et faite en référence aux dessins annexés dans lesquels :
- la figure 1 est une vue en élévation et en coupe d'un dispositif d'injection conforme à l'invention ;
- la figure 2 est une coupe II-II de la figure 1 ;
- la figure 3 représente la face aval du corps annulaire du dispositif d'injection, obtenue par électroérosion ;
- la figure 4 est une vue en perspective éclatée d'une partie du dispositif ;
- la figure 5 est une vue en perspective d'une autre partie du dispositif ;
- la figure 6 est une vue analogue à la figure 3 illustrant une variante ; et
- la figure 7 est une demi-coupe partielle semblable à la figure 1, illustrant une autre variante.

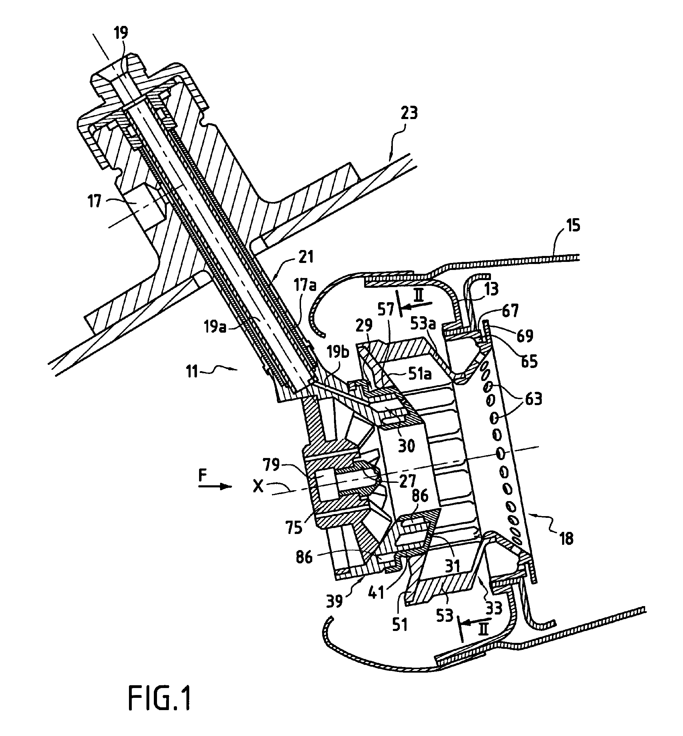

Sur la figure 1, on a représenté schématiquement en coupe l'un des dispositifs d'injection multimode 11 monté sur la paroi de fond 13 d'une chambre de combustion annulaire 15 d'un turbo réacteur. Dans l'exemple, deux modes d'injection sont combinés et le dispositif décrit comporte deux systèmes de pulvérisation de carburant, coaxiaux, alimentés respectivement par deux circuits de distribution de carburant, un circuit primaire 17, ici à débit permanent et un circuit secondaire 19, ici à débit intermittent.

Les deux circuits ont en commun un bras 21 dans lequel sont agencés deux conduits coaxiaux 17a, 19a appartenant respectivement aux circuits primaire et secondaire, connectés à une tête de pulvérisation 18. Le circuit primaire à débit permanent a un débit relativement faible. Il est plus particulièrement adapté au régime de ralenti du moteur.

Le circuit secondaire 19 à débit intermittent est conçu pour compléter le débit de carburant jusqu'au point de plein gaz, permettant notamment d'atteindre toute la puissance nécessaire au décollage. Son débit, essentiellement variable, peut être nul ou très faible à certains régimes.

L'air comprimé provenant d'un compresseur haute pression (non représenté) circule dans un carter 23 entourant la chambre de combustion 15. L'air circule d'amont en aval, suivant le sens de la flèche F.

Dans la suite de la description, les termes « amont » ou « aval » sont utilisés pour désigner la position d'un élément par rapport à un autre en considérant le sens d'écoulement des gaz.

Une partie de l'air pénètre dans la chambre de combustion 15 en passant par les dispositifs d'injection 11. Le carburant est mélangé à l'air dans le fond de chambre avant de s'enflammer dans ladite chambre de combustion.

Dans la tête de pulvérisation 18, le circuit primaire 17 aboutit à une buse d'éjection de carburant 27, axiale (on considère ici l'axe X de la tête de pulvérisation elle-même) tandis que le circuit secondaire est connecté à un distributeur 29 comportant une chambre de distribution 30, annulaire communiquant avec une pluralité de trous d'éjection de carburant 31, régulièrement répartis circonférentiellement à l'extrémité aval du distributeur.

La tête de pulvérisation comporte un corps annulaire 39 rattaché au bras 21, dans lequel sont pratiqués des perçages appartenant audits circuits primaire et secondaire et reliant les conduits 17a 19a à la buse 27 et à la chambre de distribution 30, respectivement. Sur la figure 1, on distingue notamment un perçage 19b reliant le conduit 19a à la chambre de distribution 30.

La tête de pulvérisation 18 comporte aussi un déflecteur giratoire d'air 33, annulaire, communément appelé « vrille », installé radialement extérieurement par rapport à ladite pluralité de trous d'éjection. Ce déflecteur comporte des ailettes 35 définissant entre elles des canaux d'éjection d'air 36 régulièrement espacés circonférentiellement et dirigeant l'air vers les jets de carburant.

Le distributeur 29 est constitué de deux pièces annulaires engagées l'une dans l'autre (et brasées entre elles) et définissant entre elles ladite chambre de distribution 30. L'une des pièces est le corps 39 mentionné ci-dessus. L'autre pièce est une collerette annulaire 41 formant une sorte de couvercle ; elle est engagée à l'extrémité aval du corps. Les trous 31 sont percés dans cette collerette 41.

Le corps 39 et la collerette 41 comportent des portées cylindriques de diamètres correspondants, assurant un bon centrage de l'un par rapport à l'autre. Les deux pièces sont assemblées par brasage.

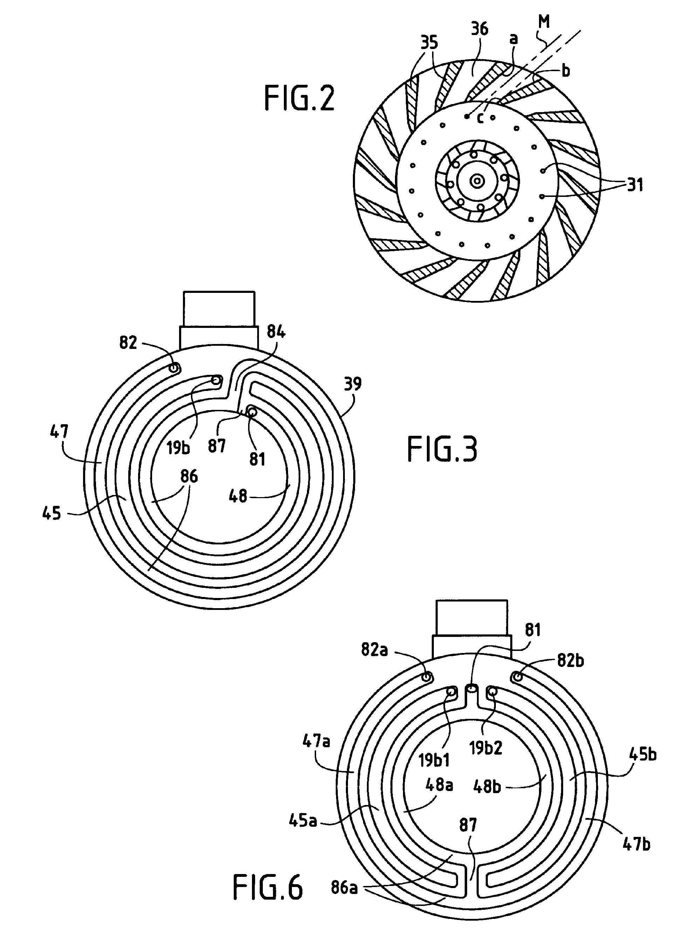

Comme le montre la figure 3, des rainures sont creusées sur la face aval du corps 39. La rainure 45, globalement annulaire, définit l'essentiel de la chambre de distribution 30, cette rainure étant refermée par la collerette 41 pour constituer ladite chambre 30. Les autres rainures 47, 48 définissent une partie de conduit du circuit primaire 17 (elles sont aussi refermées par la collerette 41) et seront décrites en détail plus loin.

Avantageusement, les rainures 45, 47, 48 peuvent être le résultat d'un traitement d'électroérosion réalisé en une seule fois sur une ébauche massive du corps annulaire 39. L'outil d'électroérosion a une forme correspondant à la configuration des empreintes visibles sur la figure 3 et qui définissent ces rainures 45, 47, 48.

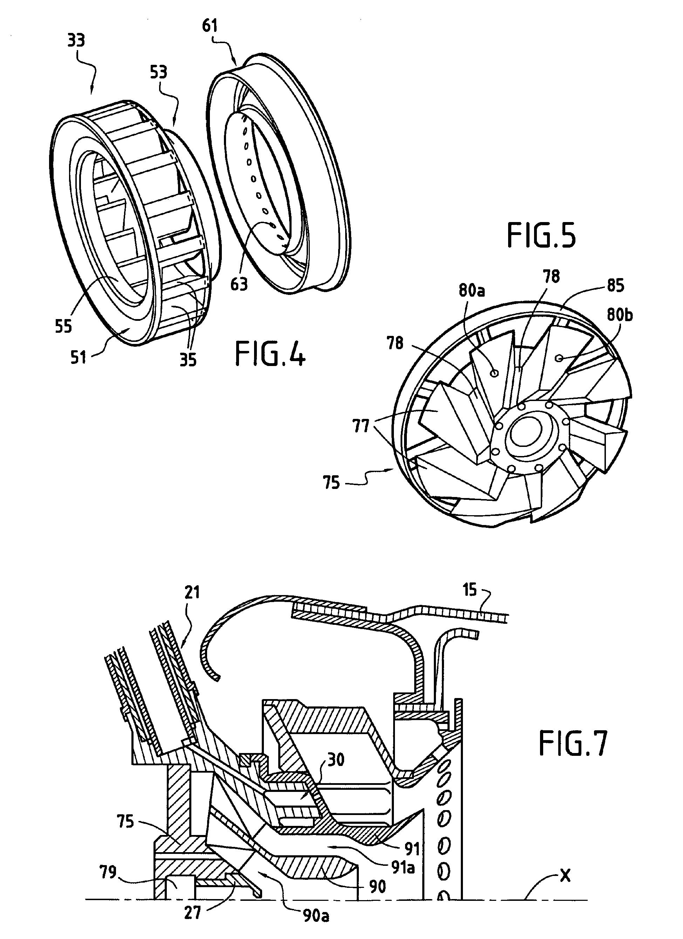

Le déflecteur annulaire giratoire 33 est formé de deux pièces annulaires 51, 53 assemblées par brasure. Il est visible en perspective sur la figure 4. Les deux pièces forment une sorte de cage d'écureuil avec les ailettes 35 d'épaisseur diminuant vers l'intérieur, comme représenté sur la figure 2. La pièce annulaire amont 51 s'engage dans la pièce annulaire aval 53 comportant les ailettes 35. La pièce 51, c'est-à-dire la paroi amont du déflecteur, comporte une portée cylindrique intérieure 55 de diamètre égal au diamètre extérieur d'une portée sphérique 57 de la collerette 41. Cette portée sphérique 57 du distributeur s'engage dans la portée cylindrique 55 du déflecteur. La pièce annulaire aval 53 est prolongée vers l'aval par un élément conique divergent 61, classiquement appelé bol, percé de deux séries de trous 63, 65 régulièrement répartis circonférentiellement. Les trous 63 sont pratiqués sur la partie conique de l'élément 61. Les trous 65, plus petits, sont pratiqués sur une collerette radiale extérieure 67. Ils débouchent en regard d'un déflecteur radial 69 (fig. 1).

De l'air provenant du compresseur s'engage dans le fond de chambre et passe par les canaux 36 et les trous 63, 65, notamment.

Comme représenté, le déflecteur annulaire 33 composé des deux pièces 51, 53 comporte deux parois intérieurement tronconiques 51a, 53a, coaxiales, respectivement amont et aval. La paroi 51a est définie dans la pièce 51. La paroi 53a est définie dans la pièce 53. La conicité de ces parois est dirigée vers l'aval, c'est-à-dire que leur diamètre diminue d'amont vers l'aval. La chambre de distribution 30 comporte aussi une paroi aval tronconique. C'est la paroi de la collerette 41 dans laquelle sont pratiqués les trous 31. La face extérieure de cette paroi possède une génératrice parallèle ou (comme c'est le cas ici) confondue avec la face intérieure de la paroi amont 51a du déflecteur annulaire.

Avantageusement, l'angle de conicité de ces faces est compris entre 45° et 80°.

Selon une autre caractéristique avantageuse, l'axe de chaque trou 31 est perpendiculaire à la génératrice de la surface 51a en ce point.

En se référant à la figure 2, on définit une médiane M pour chaque canal d'éjection d'air 36, comme étant une ligne équidistante des surfaces parallèles de sa partie radialement la plus interne, au moins. Dans l'exemple décrit, en effet, la surface a de l'une des ailettes 35 est plane tandis que la surface b de l'autre ailette, adjacente, comporte au moins une courte portion interne c, parallèle à la surface a. La médiane M est donc équidistante des surfaces a et c. La portion située entre a et c constitue la zone calibrante du canal d'éjection d'air considéré. La surface b pourrait être confondue avec la portion c.

Selon une caractéristique importante, pour chaque axe d'éjection de carburant défini par un trou d'éjection 31, il existe un canal d'éjection d'air 36 (entre deux ailettes 35) dont au moins la partie radialement la plus interne (c'est-à-dire la zone calibrante) possède une médiane M coupant sensiblement cet axe d'éjection de carburant.

Dans l'exemple, le nombre de trous d'éjection de carburant est égal au nombre de canaux d'éjection d'air. En variante, le nombre de canaux d'éjection d'air peut être un multiple du nombre de trous d'éjection de carburant.

Bien entendu, des moyens d'indexage (encoches et tenons) sont prévus de manière à obtenir la configuration de la figure 2, à l'assemblage. Le distributeur 29 fait partie du dispositif d'injection 11, le déflecteur 33 est monté sur le fond de chambre 13 (le dispositif d'injection 11 et la fond de chambre 13 étant orientés par le carter 23). Le distributeur 29 coulisse dans le déflecteur 33 au niveau des surfaces 55 et 57.

Cette configuration particulière qui situe les canaux d'air de la vrille par rapport aux trous d'éjection de carburant, permet d'optimiser la pulvérisation de ce carburant. L'homogénéité du mélange air-carburant améliore la combustion et diminue la pollution.

De plus l'inclinaison des parois 51a, 53a a pour résultat de moins perturber le flux d'air qui traverse le déflecteur giratoire. On réduit aussi globalement l'encombrement axial du dispositif.

La tête de pulvérisation 18 comporte aussi une pièce centrale 75 (formant un déflecteur giratoire d'air), montée axialement à l'intérieur du corps annulaire 39. Cette pièce est représentée en perspective sur la figure 5. Elle comporte des ailettes 77 régulièrement espacées circonférentiellement. Des gorges 78 sont ainsi définies entre ces ailettes. La forme de celles-ci est telle que les gorges sont inclinées par rapport à l'axe X. Lorsque la pièce centrale est engagée dans le corps annulaire 39 les gorges 78 sont refermées radialement extérieurement et définissent des canaux d'éjection d'air d'un autre déflecteur giratoire ou « vrille » agencés autour de la buse 27.

La pièce 75 comporte une partie aval conique à conicité dirigée vers l'aval, qui s'engage dans une partie conique correspondante définie dans le corps 39, à son extrémité amont. Les ailettes 77 sont définies dans cette partie conique, ce qui réduit encore l'encombrement axial (selon X) de la tête de pulvérisation 18. Par ailleurs, à l'amont, la pièce 75 comporte une portée cylindrique 85 qui s'ajuste dans une portée cylindrique correspondante définie à l'amont du corps 39, pour un bon centrage de la pièce 75 dans ledit corps 39. Des moyens d'indexage assurent le positionnement dans le sens circonférentiel entre la pièce 75 et le corps 39.

Une cavité fermée 79 est définie au centre de la pièce 75. la buse 27 est montée dans cette cavité. Un conduit 80 est ménagé dans une ailette 77 et débouche dans ladite cavité 79. Il constitue la partie terminale du circuit primaire. Ce conduit 80 communique avec un autre perçage 81 du corps 39 qui débouche à une extrémité de la rainure 48 (figure 3). Un perçage 82 réalisé dans le corps 39 relie une extrémité de la rainure 47 à l'extrémité du conduit 17a qui appartient au circuit primaire défini ci-dessus.

Selon une caractéristique remarquable, ledit circuit primaire comporte au moins une partie de conduit 86 jouxtant ladite chambre de distribution 30, pour son refroidissement. En effet, cette partie de conduit 86 est constituée par les canaux définis par les rainures 47, 48 recouvertes par la collerette 41. Dans les exemples décrits, ladite partie de conduit comporte un tronçon annulaire externe (correspondant à la rainure 47) ménagé radialement extérieurement par rapport à ladite chambre de distribution et un tronçon annulaire interne (correspondant à la rainure 48) ménagé radialement intérieurement par rapport à ladite chambre de distribution.

Dans le mode de réalisation de la figure 3, la configuration obtenue par électroérosion définit un passage radial 84 traversant la rainure 45 et établissant la communication entre les rainures 47 et 48. Une paroi radiale 87 est aussi définie au voisinage de l'orifice du perçage 81, obligeant le carburant à s'écouler sur pratiquement 360° dans le tronçon annulaire interne. En conséquence, dans l'exemple de la figure 3, les deux tronçons annulaires précités, constituant ladite partie de conduit 86 du circuit primaire, sont connectés en série. Le carburant du circuit primaire pénètre dans ce labyrinthe par le perçage 82, circule circulairement autour de la chambre de distribution 30 radialement extérieurement puis radialement intérieurement par rapport à celle-ci avant de rejoindre la cavité 79 via le perçage 81 puis le conduit 80.

Comme l'écoulement de carburant dans le circuit primaire est permanent, un refroidissement de la chambre de distribution 30, est assuré en toute circonstance, ce qui évite les phénomènes de cokéfaction du carburant dans ladite chambre de distribution, qui pourraient se produire lorsque le débit du circuit secondaire est nul ou très faible.

La figure 6 illustre une variante de la configuration de la chambre de distribution 30 et de ladite partie de conduit 86a assurant son refroidissement.

La chambre de distribution comporte deux parties symétriques (définies par deux rainures 45a, 45b symétriques) alimentées séparément par deux perçages 19b1, 19b2, tout deux connectés au conduit 19a.

Les deux tronçons annulaires interne et externe définis par les rainures qui entourent les rainures 45a, 45b, comportent chacun deux branches jouxtant respectivement les deux parties symétriques de la chambre de distribution (rainures 45a, 45b).

Ainsi, le tronçon annulaire externe comporte deux telles branches symétriques (rainures 47a, 47b) qui alimentent séparément les deux perçages 82a, 82b communiquant avec la cavité 79 par les conduits 80a et 80b. Elles se rejoignent au niveau d'un passage radial 87 ménagé entre les deux parties symétriques de la chambre de distribution et rejoignant le tronçon annulaire interne qui comporte aussi deux branches symétriques (rainures 48a, 48b) qui se rejoignent en un point diamétralement opposé au passage 87, pour rejoindre le perçage 81 alimenté par le conduit 17a.

L'écoulement de carburant symétrique qui résulte de cette configuration de ladite partie de conduit 86a jouxtant la chambre de distribution assure un refroidissement particulièrement homogène de cette dernière.

Dans la variante de la figure 7 où les éléments de structure analogues portent les mêmes références numériques, on a modifié le déflecteur giratoire d'air agencé autour de la buse 27. Celui-ci se compose de deux guides annulaires assemblés axialement 90, 91 définissant deux « vrilles » contra-rotatives. Autrement dit, on distingue un déflecteur giratoire d'air interne 90a et un déflecteur giratoire d'air externe 91a séparés par un guide annulaire 90 profilé formant un venturi. Un autre guide annulaire 91 se prolonge vers l'aval jusqu'au bol pour éviter les interactions avec la "vrille" associée à la chambre de distribution 30. Cet agencement produit une augmentation des " cisaillements " dans les écoulements d'air, qui participent à l'atomisation du carburant issu de la buse. Le fait que les deux vrilles définies autour de la buse sont contra-rotatives favorisent la concentration de la pulvérisation du carburant au voisinage de l'axe X. La présence d'un venturi permet d'accélérer puis de ralentir les gouttelettes de carburant issues de la buse, ce qui favorise grandement la pulvérisation de ce carburant. L'air issu de la vrille extérieure est introduit dans le bol avec une composante dirigée vers l'axe X. La zone de confluence des deux flux d'air issus des deux vrilles crée des écoulements à fort niveau de turbulence améliorant la pulvérisation du carburant. Globalement, cette architecture assure une bonne stabilité et de bonnes performances au ralenti, de la chambre de combustion.

## Revendications

1. Dispositif d'injection multimode pour chambre de combustion, du type comportant au moins deux systèmes de pulvérisation de carburant coaxiaux, un système de pulvérisation périphérique comprenant un distributeur à chambre de distribution (30) annulaire communiquant avec une pluralité de trous d'éjection de carburant (31) régulièrement répartis circonférentiellement et un déflecteur giratoire d'air (33), annulaire, ledit déflecteur comportant des ailettes définissant des canaux d'éjection d'air (36) régulièrement espacés circonférentiellement et dirigeant l'air vers les jets de carburant issus desdits trous d'éjection de sorte que, pour chaque axe d'éjection de carburant défini par un trou d'éjection, il existe un canal d'éjection d'air correspondant dont au moins la partie radialement la plus interne possède une médiane (M) coupant sensiblement cet axe d'éjection de carburant, le dispositif d'injection étant **caractérisé en ce que** ledit déflecteur annulaire est installé radialement extérieurement par rapport à ladite pluralité de trous d'éjection, **en ce qu'**il comporte deux parois (51a, 53a) intérieurement tronconiques coaxiales, respectivement amont et aval, de conicité dirigée vers l'aval, **en ce que** ladite chambre de distribution annulaire comporte une paroi tronconique dans laquelle sont pratiqués lesdits trous et **en ce que** la face extérieure de cette paroi tronconique possède une génératrice parallèle ou confondue avec celle de la face intérieure de ladite paroi amont dudit déflecteur annulaire.

2. Dispositif selon la revendication 1, **caractérisé en ce que** le nombre de trous d'éjection de carburant (31) est égal au nombre de canaux d'éjection d'air (31).

3. Dispositif selon la revendication 1, **caractérisé en ce que** le nombre de canaux d'éjection d'air est un multiple du nombre de trous d'éjection de carburant.

4. Dispositif selon l'une quelconque des revendications précédentes, **caractérisé en ce que** l'angle de conicité desdites faces est compris entre 45° et 80°.

5. Dispositif selon l'une des revendications précédentes, **caractérisé en ce que** la paroi amont dudit déflecteur comporte une portée cylindrique intérieure (55) dans laquelle s'engage une portée sphérique (57) de diamètre correspondant dudit distributeur.

6. Dispositif selon l'une des revendications précédentes, **caractérisé en ce que** ledit distributeur est constitué de deux pièces (39, 41) annulaires à portées cylindriques engagées l'une dans l'autre et définissant entre elles ladite chambre annulaire.

7. Dispositif selon l'une des revendications précédentes, **caractérisé en ce qu'**un autre système de pulvérisation comprenant une buse d'éjection de carburant (27) axiale est pourvu d'un autre déflecteur giratoire d'air (75) agencé autour de cette buse et deux guides annulaires assemblés axialement (90, 91) définissant deux vrilles contra-rotatives (90a et 91a).

8. Chambre de combustion, **caractérisée en ce qu'**elle comporte une pluralité de dispositifs d'injection multimode selon l'une des revendications 1 à 6.

9. Turboréacteur, **caractérisé en ce qu'**il comporte une chambre de combustion selon la revendication 8.

## Patentansprüche

1. Multimodale Einspritzvorrichtung für eine Brennkammer, umfassend mindestens zwei koaxiale Brennstoffzerstäubungssysteme, ein peripheres Zerstäubungssystem, umfassend einen Verteiler mit ringförmiger Verteilerkammer (30), die mit einer Vielzahl von Treibstoffabgabeöffnungen (31) in Verbindung steht, die regelmäßig in Umfangsrichtung verteilt sind, und ein verstellbares ringförmiges Luftleitblech (33), umfassend Flügel, die Luftabgabekanäle (36) definieren, die regelmäßig in Umfangsrichtung beabstandet sind und die Luft zu den Treibstoffstrahlen leiten, die aus den Abgabelöchern austreten, so dass für jede Treibstoffabgabeachse, die durch ein Abgabeloch definiert ist, ein entsprechender Luftabgabekanal vorhanden ist, bei dem mindestens der radial innerste Teil eine Mittellinie (M) besitzt, die im Wesentlichen diese Treibstoffabgabeachse schneidet, wobei die Einspritzvorrichtung **dadurch gekennzeichnet ist, dass** das ringförmige Leitblech radial außen in Bezug zu der Vielzahl von Abgabeöffnungen installiert ist, und dass es zwei koaxiale innen kegelstumpfartige Wände (51 a, 53a) stromaufwärts bzw. stromabwärts mit einer stromabwärts gerichteten Konizität umfasst, dass die ringförmige Verteilerkammer eine kegelstumpfartige Wand umfasst, in der die Löcher vorgesehen sind, und dass die Außenseite dieser kegelstumpfartigen Wand eine Mantellinie parallel oder zusammenfallend mit jener der Innenseite der stromaufwärtigen Wand des ringförmigen Leitblechs besitzt.

2. Vorrichtung nach Anspruch 1, **dadurch gekennzeichnet, dass** die Anzahl von Treibstoffabgabelöchern (31) gleich der Anzahl von Luftabgabelöchern (31) ist.

3. Vorrichtung nach Anspruch 1, **dadurch gekennzeichnet, dass** die Anzahl von Luftabgabekanälen ein Vielfaches von der Anzahl von Treibstoffabgabelöchern ist.

4. Vorrichtung nach einem der vorhergehenden Ansprüche, **dadurch gekennzeichnet, dass** der Konizitätswinkel der Seiten zwischen 45° und 80° beträgt.

5. Vorrichtung nach einem der vorhergehenden Ansprüche, **dadurch gekennzeichnet, dass** die stromaufwärtige Wand des Leitblechs eine zylindrische Innenfläche (55) umfasst, in die eine kugelförmige Fläche (57) mit einem entsprechenden Durchmesser des Verteilers eingreift.

6. Vorrichtung nach einem der vorhergehenden Ansprüche, **dadurch gekennzeichnet, dass** der Verteiler von zwei ringförmigen Teilen (39, 41) mit zylindrischen Flächen gebildet ist, die ineinander eingreifen und zwischen sich die ringförmige Kammer definieren.

7. Vorrichtung nach einem der vorhergehenden Ansprüche, **dadurch gekennzeichnet, dass** ein weiteres Zerstäubungssystem, umfassend eine axiale Treibstoffabgabedüse (27), mit einem weiteren verstellbaren Luftleitblech (75), das um diese Düse angeordnet ist, und zwei axial verbundenen ringförmigen Führungen (90, 91) versehen ist, die zwei gegenläufige Schnecken (90a und 91 a) definieren.

8. Brennkammer, **dadurch gekennzeichnet, dass** sie eine Vielzahl von multimodalen Einspritzvorrichtungen nach einem der Ansprüche 1 bis 6 umfasst.

9. Turboreaktor, **dadurch gekennzeichnet, dass** er eine Brennkammer nach Anspruch 8 umfasst.

## Claims

1. Multimode fuel injector for combustion chambers, of the type comprising at least two coaxial fuel atomisation systems, a peripheral atomisation system comprising a distributor with annular distribution chamber (30) communicating with a plurality of fuel ejection orifices (31) distributed at regular intervals along the circumference and an annular air eddy deflector (33), said deflector comprising vanes defining air ejection channels (36) spaced at regular intervals along the circumference and directing the air towards the fuel jets coming from said ejection orifices in such a way that, for each fuel ejection axis defined by an ejection orifice, there is a corresponding air ejection channel of which at least the radially most internal part has a median (M) substantially intersecting this fuel ejection axis, the injection device being **characterized in that** said annular deflector is installed radially on the outside relative to said plurality of ejection orifices, **in that** it comprises two internally truncated coaxial walls (51a, 53a), upstream and downstream respectively, with their conicity directed towards the downstream, **in that** said annular distribution chamber comprises a truncated wall in which said orifices are provided and **in that** the exterior face of this truncated wall has a generator parallel to or merging with that of the interior face of said upstream wall of said annular deflector.

2. Fuel injector according to claim 1, **characterized in that** the number of fuel ejection orifices (31) is equal to the number of air ejection channels (31).

3. Fuel injector according to claim 1, **characterized in that** the number of air ejection channels is a multiple of the number of fuel ejection orifices.

4. Fuel injector according to any one of the preceding claims, **characterized in that** the angle of conicity of said faces ranges between 45° and 80°.

5. Fuel injector according to any one of the preceding claims, **characterized in that** the upstream wall of said deflector comprises an interior cylindrical region (55) in which a spherical region (57) with diameter corresponding to said distributor is engaged.

6. Fuel injector according to any one of the preceding claims, **characterized in that** said distributor consists of two annular parts (39, 41) with cylindrical regions one engaged in the other and between them defining said annular chamber.

7. Fuel injector according to any one of the preceding claims, **characterized in that** another atomisation system comprising an axial fuel ejection nozzle (27) is provided with another air eddy deflector (75) arranged around this nozzle and two axially assembled annular guides (90, 91) defining two counter-rotational swirlers (90a and 91a).

8. Combustion chamber, **characterized in that** it comprises a plurality of multimode fuel injectors according to any one of claims 1 to 6.

9. Jet engine, **characterized in that** it comprises a combustion chamber according to claim 8.
